# EUROPÄISCHE PATENTANMELDUNG

(11) **EP 2 592 024 A1**
(43) Veröffentlichungstag der Anmeldung: **15.05.2013**
(21) Anmeldenummer: 12191746.2
(22) Anmeldetag: 08.11.2012
(51) Int. Cl.: B65G 31/04, B65G 69/04

(54) **Befülleinrichtung für Schüttgut**

(30) Priorität: 08.11.2011 AT 16482011
(71) Anmelder: Wildfellner Gesellschaft m.b.H., 4611 Buchkirchen (AT)
(72) Erfinder: Wildfellner, Andre, 4611 Buchkirchen (AT)
(74) Vertreter: KLIMENT & HENHAPEL

(57) **Zusammenfassung**

Befüllvorrichtung für Schüttgut umfassend eine Fördereinrichtung, sowie eine, am Abgabeende der Fördereinrichtung angeordnete Auswurfeinrichtung, wobei die Auswurfeinrichtung ein rotierendes Auswurfelement (4) aufweist. Erfindungsgemäß ist hierbei vorgesehen, dass es sich bei der Fördereinrichtung um einen wellenlosen Spiralförderer (6) handelt, und der Spiralförderer (6) sowie das rotierende Auswurfelement (4) der Auswurfeinrichtung über denselben Antrieb (1) verfügen, der mit dem Spiralförderer (6) und/oder dem rotierenden Auswurfelement (4) über ein Übersetzungsgetriebe (2) verbunden ist. Abhängig von erwarteter Fördermenge, Schüttgutqualität und erforderlicher Auswurfgeschwindigkeit können somit der Spiralförderer (6), der Antrieb (1) und das Übersetzungsgetriebe (2) so ausgelegt werden, dass sowohl die Förderung, als auch der Auswurf des Schüttgutes im Regelfall wie gewünscht bewerkstelligt werden. Der Spiralförderer (6) bietet auch bei Abweichungen von Fördermenge oder Schüttgutqualität ausreichend Flexibilität, um dennoch einen einwandfreien Betrieb der erfindungsgemäßen Befüllvorrichtung zu gewährleisten. Auf diese Weise kann kostengünstig und wartungsarm eine betriebssichere Befüllvorrichtung insbesondere bei Kleinanlagen verwirklicht werden.

## Beschreibung

Die Erfindung betrifft eine Befüllvorrichtung für Schüttgut umfassend eine Fördereinrichtung, sowie eine, am Abgabeende der Fördereinrichtung angeordnete Auswurfeinrichtung, wobei die Auswurfeinrichtung ein rotierendes Auswurfelement aufweist, gemäß dem Oberbegriff von Anspruch 1.

Befüllvorrichtungen der genannten Art werden auch als Schüttgutschleuder bezeichnet und dienen etwa zum Befüllen von Lagerräumen oder Lagerbunker mit Schüttgut aus staubförmigem, körnigem, granularem, halbfeuchtem oder faserigem Material, z.B. Pellets oder Hackschnitzel. Die Fördereinrichtung befördert dabei das Schüttgut von einem Aufgabeort zu einem Abgabeende, wobei in der Regel eine Höhendifferenz überwunden wird. Am Abgabeende fällt das Schüttgut in die Auswurfeinrichtung, in der ein rotierendes Element das Schüttgut in den Lagerraum auswirft. Das rotierende Element ist etwa als rotierende Scheibe mit vertikaler Rotationsachse und radial angeordneten Auswerferplatten ausgeführt, die auch als Fächerscheibe bezeichnet wird. Das Schüttgut fällt dabei auf die rotierende Fächerscheibe und wird von den Auswerferplatten ebenfalls in Rotation versetzt. Die Zentrifugalkraft treibt das Schüttgut in weiterer Folge in radialer Richtung an den Rand der Fächerscheibe und wird schließlich in tangentialer Richtung ausgeworfen. Ein Auswerferkasten mit einer Auswurföffnung umgibt dabei die Fächerscheibe, um das Schüttgut zielgerichtet über die Auswurföffnung auszuwerfen. Das rotierende Auswurfelement ist hierfür mit einem Auswerferantrieb versehen, der in der Regel auch über eine eigene Auswerfersteuerung verfügt.

Für die Fördereinrichtung sind unterschiedliche Ausführungsformen bekannt, insbesondere Schneckenförderer mit einem Schneckengewinde und einer axialen Schneckenwelle. Der Schneckenförderer ist dabei von einem Förderrohr umschlossen, sodass auch ein schräger, insbesondere ein vertikaler Transport des Schüttguts möglich ist. Um die Fördereinrichtung an unterschiedliche Fördermengen und Schüttgutqualität anpassen zu können, ist die Schneckenwelle mit einem eigenen Förderantrieb und einer ihr zugeordneten Steuereinrichtung ausgestattet.

Eine solche Ausführungsform benötigt jedoch erhöhten Steuerungsaufwand, da zwei getrennte Antriebe geeignet anzusteuern sind, etwa um mit dem Förderantrieb auf unterschiedliche Schüttgutqualität oder Fördermengen reagieren zu können, und mit dem Auswerferantrieb die Wurfweite steuern zu können. Selbstredend ist die Verwendung zweier unabhängiger Antriebe und ihrer Steuerungen auch mit einem entsprechenden Verkabelungsaufwand verbunden, der die Errichtungs- und Wartungskosten erhöht. Zudem ist der Auswerferantrieb zumeist in der Nähe der Auswurfeinrichtung angeordnet, somit in einem Bereich erhöhter Staubentwicklung mit entsprechendem Reinigungsaufwand und der Gefahr von Staubexplosionen.

Es ist somit das Ziel der Erfindung eine Befüllvorrichtung für Schüttgut so auszuführen, dass die Errichtungs- und Wartungskosten verringert werden, und die Betriebssicherheit erhöht wird. Insbesondere soll die erfindungsgemäße Befüllvorrichtung auch bei unterschiedlichen Fördermengen und Schüttgutqualitäten wartungsarm und bedienerfreundlich sein und leicht an unterschiedliche Fördermengen und Lagerraumbedingungen anzupassen sein.

Diese Ziele werden durch die Merkmale von Anspruch 1 erreicht. Anspruch 1 bezieht sich auf eine Befüllvorrichtung für Schüttgut umfassend eine Fördereinrichtung, sowie eine, am Abgabeende der Fördereinrichtung angeordnete Auswurfeinrichtung, wobei die Auswurfeinrichtung ein rotierendes Auswurfelement aufweist. Erfindungsgemäß ist hierbei vorgesehen, dass es sich bei der Fördereinrichtung um einen wellenlosen Spiralförderer handelt, und der Spiralförderer sowie das rotierende Auswurfelement der Auswurfeinrichtung über denselben Antrieb verfügen, der mit dem Spiralförderer und/oder dem rotierenden Auswurfelement über ein Übersetzungsgetriebe verbunden ist. Ein wellenloser Spiralförderer unterscheidet sich von einem herkömmlichen Schneckenförderer dadurch, dass der wellenlose Spiralförderer das Schüttgut ohne Mittelwelle befördert. Ein wellenloser Spiralförderer besteht dabei in der Regel aus einem Flachstahl, welcher auf dafür vorgesehenen Fertigungsmaschinen in Längsrichtung schraubengewindeartig definiert gezogen wird. Damit ergeben sich die, für die unterschiedlichen Kundenanforderungen verschiedenen Spiraldurchmesser und Spiralsteigungen. Da am Aufgabeort des Spiralförderers keine Lager erforderlich sind und der Antrieb am Abgabeende auch außerhalb einer Abführrutsche und dergleichen für das Schüttgut gekoppelt werden kann, können Verschmutzungen von Dichtungen oder Lager mit dem Schüttgut vermieden werden. Vielmehr ist die flexible Förderspirale der einzige bewegliche Teil, der mit dem Schüttgut in Berührung kommt, wobei das Schüttgut sich im Förderrohr selbst zentriert und damit für einen konstanten Abstand zwischen der Förderspirale und der Innenwand des Förderrohres sorgt. Der wellenlose Spiralförderer bietet außerdem Flexibilität gegenüber schwankenden Fördermengen, sowie veränderlicher Schüttgutqualität, etwa aufgrund variierender Zusammensetzung des Schüttgutes oder unterschiedlicher Feuchtigkeit, da die Förderspirale über ausreichend Elastizität verfügt, um durch Dehnung oder Stauchung auf unterschiedliche Belastungen zu reagieren. Ein Spiralförderer ist somit bedienerfreundlich und wartungsarm, und bietet außerdem bequemen Zugang zu allen innenliegenden Komponenten zwecks Inspektion oder Reinigung.

Um dennoch die Auswurfeinrichtung unabhängig von der Fördereinrichtung auslegen zu können, ist erfindungsgemäß ein Übersetzungsgetriebe vorgesehen, über welches das rotierende Auswurfelement und/oder der Spiralförderer mit dem Antrieb verbunden sind. Insbesondere bei Kleinanlagen ist diese Ausstattung an mechanischen Komponenten vollkommen ausreichend. Im Zuge der Konzeption einer erfindungsgemäßen Befüllvorrichtung werden somit abhängig von erwarteter Fördermenge, Schüttgutqualität und erforderlicher Auswurfgeschwindigkeit die Förderspirale des Spiralförderers, der Antrieb und das Übersetzungsgetriebe so ausgelegt, dass sowohl die Förderung, als auch der Auswurf des Schüttgutes im Regelfall wie gewünscht bewerkstelligt werden. Bei Abweichungen von Fördermenge oder Schüttgutqualität bietet der Spiralförderer hingegen ausreichend Flexibilität, um dennoch einen einwandfreien Betrieb der erfindungsgemäßen Befüllvorrichtung zu gewährleisten. Auf diese Weise kann kostengünstig und wartungsarm eine betriebssichere Befüllvorrichtung insbesondere bei Kleinanlagen verwirklicht werden.

Erfindungsgemäß können dabei sowohl der Spiralförderer als auch das rotierende Auswurfelement über ein Übersetzungsgetriebe mit dem Antrieb verbunden sein, oder der Antrieb wird am Spiralförderer angeordnet und über ein Übersetzungsgetriebe mit dem rotierenden Auswurfelement verbunden, oder der Antrieb wird am rotierenden Auswurfelement angeordnet und über ein Übersetzungsgetriebe mit dem Spiralförderer verbunden. Je nach Anwendung kann sich eine dieser Varianten empfehlen, wobei etwa durch die Anordnung des Antriebes am Spiralförderer und Ankopplung der Auswurfeinrichtung an den Antrieb des Spiralförderers über ein Übersetzungsgetriebe die Auswurfeinrichtung auch in staubexponierten Bereichen angeordnet werden kann, da aufgrund der Vermeidung elektrischer Einheiten keine Gefahr von Staubexplosionen oder dergleichen mehr besteht.

Eine Verstellbarkeit des Übersetzungsgetriebes während des Betriebes ist im Regelfall nicht vorgesehen. Um während des Betriebes dennoch variierendes Auswurfverhalten der Auswurfeinrichtung zu erreichen, wird des Weiteren vorgeschlagen, dass die Rotationsachse des rotierenden Auswurfelements um eine vertikale Achse schwenkbar ausgeführt ist. Auf diese Weise können Auswurfrichtung und Auswurfweite verändert werden.

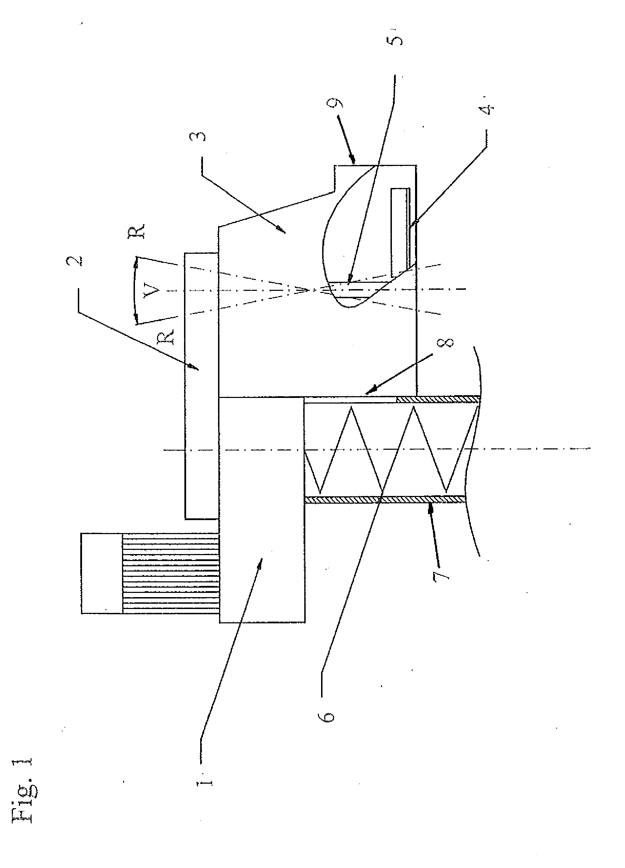

Die Erfindung wird im Folgenden anhand eines Ausführungsbeispiels mithilfe der beiliegenden Figur 1 näher erläutert, die eine schematische Darstellung einer erfindungsgemäßen Befüllvorrichtung zeigt.

Ersichtlich ist hierbei der wellenlose Spiralförderer 6, der innerhalb eines Förderrohres 7 geführt ist. Gemäß der gezeigten Ausführungsform ist am Abgabeende des Spiralförderers 6 ein Antrieb 1 angeordnet, wobei sich die Abgabeöffnung 8 für das Schüttgut unterhalb des Antriebes 1 befindet. Das Schüttgut wird in weiterer Folge etwa über eine Abführrutsche in einen Auswerferkasten 3 transportiert, in dem ein rotierendes Auswurfelement 4 mit einer Welle 5 angeordnet ist. Im gezeigten Ausführungsbeispiel handelt es sich etwa um eine rotierende Auswerferscheibe mit radial auf der Auswerferscheibe angeordneten Auswerferplatten. Alternativ dazu könnte die Auswerferscheibe aber auch feststehen und die Auswerferplatten in geringfügigem Abstand oberhalb der Auswerferscheibe rotieren. Das Schüttgut wird in weiterer Folge wie bereits beschrieben mithilfe des rotierenden Elements 4 in Rotation versetzt und über eine Auswurföffnung 9 im Auswerferkasten 3 in den Lagerraum oder Lagerbunker geschleudert.

Die Welle 5 des rotierenden Auswurfelements 4 ist über ein Übersetzungsgetriebe 2 mit dem Antrieb 1 des Spiralförderers 6 verbunden. Die Rotationsgeschwindigkeit des rotierenden Auswurfelements 4 kann somit je nach Auslegung des Übersetzungsgetriebes 2 unabhängig von der Fördergeschwindigkeit des Spiralförderers 6 gewählt werden und wird im Zuge der Konzeption der Befüllvorrichtung entsprechend ausgelegt. Freilich könnte auch eine Verstellbarkeit des Übersetzungsgetriebes 2 vorgesehen sein, insbesondere bei Kleinanlagen wird aber in der Regel auf eine solche Verstellbarkeit verzichtet werden können. Das rotierende Auswurfelement 4 verfügt über eine Rotationsachse R, die um eine vertikale Achse V schwenkbar ausgeführt ist, indem die Welle 5 entsprechend verschwenkbar gelagert ist. Alternativ könnte auch der gesamte Auswerferkasten 3 verschwenkbar gelagert sein, mit einer, relativ zum Auswerferkasten 3 feststehenden Welle 5.

Im gezeigten Ausführungsbeispiel ist der Auswerferkasten 3 unmittelbar neben dem Spiralförderer 6 angeordnet, sodass etwa auf eine Abführrutsche und dergleichen verzichtet werden kann, und das Schüttgut direkt vom Spiralförderer 6 in den Auswerferkasten 3 fällt. Es wäre aber auch denkbar, das rotierende Auswurfelement 4 koaxial zum Spiralförderer 6 anzuordnen, wobei das rotierende Auswurfelement 4 jedoch nicht unmittelbar mit dem Spiralförderer 6 verbunden ist, sondern mittelbar über das Übersetzungsgetriebe 2, um weiterhin unterschiedliche Rotationsgeschwindigkeiten des Spiralförderers 6 und des rotierenden Auswurfelements 4 zu ermöglichen.

Im Zuge der Konzeption einer erfindungsgemäßen Befüllvorrichtung werden somit abhängig von erwarteter Fördermenge, Schüttgutqualität und erforderlicher Auswurfgeschwindigkeit der Spiralförderer 6, der Antrieb 1 und das Übersetzungsgetriebe 2 so ausgelegt, dass sowohl die Förderung, als auch der Auswurf des Schüttgutes im Regelfall wie gewünscht bewerkstelligt werden. Wie bereits erwähnt wurde, bietet der Spiralförderer 6 auch bei Abweichungen von Fördermenge oder Schüttgutqualität ausreichend Flexibilität, um dennoch einen einwandfreien Betrieb der erfindungsgemäßen Befüllvorrichtung zu gewährleisten. Separate Antriebe für die Auswurfeinrichtung und die Fördereinrichtung sind somit nicht mehr erforderlich.

## Patentansprüche

1. Befüllvorrichtung für Schüttgut umfassend eine Fördereinrichtung, sowie eine, am Abgabeende der Fördereinrichtung angeordnete Auswurfeinrichtung, wobei die Auswurfeinrichtung ein rotierendes Auswurfelement (4) aufweist, **dadurch gekennzeichnet, dass** es sich bei der Fördereinrichtung um einen wellenlosen Spiralförderer (6) handelt, und der Spiralförderer (6) sowie das rotierende Auswurfelement (4) der Auswurfeinrichtung über denselben Antrieb (1) verfügen, der mit dem Spiralförderer (6) und/oder dem rotierenden Auswurfelement (4) über ein Übersetzungsgetriebe (2) verbunden ist.

2. Befüllvorrichtung nach Anspruch 1, **dadurch gekennzeichnet, dass** die Rotationsachse (R) des rotierenden Auswurfelements (4) um eine vertikale Achse (V) schwenkbar ausgeführt ist.
